# EUROPEAN PATENT APPLICATION

(11) **EP 3 163 065 A2**
(43) Date of publication of application: **03.05.2017**
(21) Application number: 16195699.0
(22) Date of filing: 26.10.2016
(51) Int. Cl.: F02M 31/125, F02M 53/02, F02M 69/46

(54) **PREHEATER FOR A FUEL RAIL**

(30) Priority: 27.10.2015 GB 201518934
(71) Applicant: Ford Global Technologies, LLC, Dearborn, MI 48126 (US)
(72) Inventor: DUFLOUX, Jean-Claude, Stansted Mountfitchet, Essex CM24 8PB (GB)
(74) Representative: Stratagem IPM Limited

(57) **Abstract**

A preheater (10) is provided for a fuel rail (20) including a plurality of injectors (30). The preheater (10) comprises a flexible housing (12) configured to encase the fuel rail (20) adjacent to one or more of the injectors (30) and an electric heating element (14) running substantially throughout the housing (12).

## Description

This invention relates to a preheater for a fuel rail and, in particular, to a preheater for a direct injection fuel rail.

The use of biofuels such as E85-E100 is increasing worldwide. The use patterns for these ethanol based biofuels globally are uneven to such an extent that these fuels are becoming the dominant fuel in some markets, such as Brazil.

A problem arises when using biofuels, including ethanol based biofuels, as a result of their lower volatility at low temperatures when compared with gasoline based fuels. This can lead to difficulties in starting up the engine in cold ambient temperatures. This problem also arises with gasoline based fuels under extremely cold conditions.

It is known to provide some level of heating of the fuel prior to attempting an engine start. However, because extreme cold conditions and biofuel use account for only part of the market, universal application of integrated heating solutions for the fuel prior to starting would not be economical.

It is against this background that the present invention has arisen.

According to the present invention there is provided a preheater for a fuel rail including a plurality of injectors, the preheater comprising a flexible housing configured to encase the fuel rail adjacent to one or more of the injectors and an electric heating element running substantially throughout the housing along a tortuous path.

By providing a preheater that is a separate device, not integrated into the fuel rail, the preheater can be fitted just to those new vehicles that are destined for cold climates or locations where ethanol based biofuels are the predominant fuel. In addition, the preheater can also be retrofitted to existing vehicles, for example, if the vehicle is exported or if the vehicle changes fuelling preferences from predominantly gasoline to predominantly biofuel.

The housing may include one or more fixings configured to affix the preheater to the fuel rail. For a system with (n) injectors, (n-1) fixings are provided. Therefore, where four injectors are provided, three fixings would be provided. For a system with three injectors, two fixings would be provided. The fixings may be magnetic or mechanical. For example poppers may be provided.

The housing may be fabricated from a thermally insulating material. The thermally insulating material may furthermore be a non-flammable composite which may be a woven material. The housing therefore serves two functions: firstly it provides the electric heating element in the correct position to heat the fuel that flows into the injectors and, secondly, it prevents the heat provided to the fuel from being lost to other engine components adjacent to the fuel rail, including into the air around the fuel injectors.

The flexible housing may be configured to encase substantially the entire fuel rail adjacent to all of the injectors.

The electric heating element may comprise wires woven into the inside of the material of the housing.

The electric heating element may be powered by a 12V supply. The electric heating element must be active prior to the starting of the vehicle's combustion engine. Therefore the electric heating element is powered by an electrical supply that is independent of the combustion engine. This is typically provided by a 12V supply within the vehicle, although the voltage could differ depending on the supply available. Alternatively, the supply may be provided externally to the vehicle.

The invention will now be further and more particularly described, by way of example only, and with reference to the accompanying drawings, in which:
Figure 1 shows a preheater according to the present invention fitted onto a fuel rail supplying a cylinder head for a four cylinder engine; and
Figure 2 shows a further example of a preheater according to the present invention.

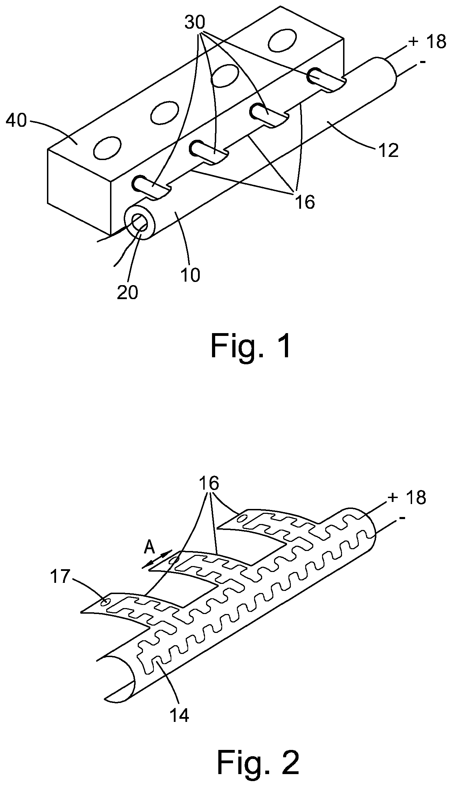

Figure 1 shows a preheater 10 covering a fuel rail 20 provided with four injectors 30 for introducing fuel into the cylinder head 40.

The preheater 10 comprises a housing 12 and at least one electric heating element 14.

The configuration of the electric heating element 14 will be described in more detail with reference to Figure 2. The housing 12 extends along substantially the entire length of the fuel rail that is adjacent to the cylinder head 40.

The housing 12 does not extend along the injectors 30. The preheater 10 is fabricated from a thermally insulating material that is non-flammable. The thermal insulation provided by the housing 12 prevents the heat provided by the heating element 14 from being wasted by escaping into the environment or transferring heat out of the fuel into other engine integers adjacent to the fuel rail 20.

The housing in Figure 2 is shown in a configuration ready for installation on the fuel rail. It is provided with three tabs 16. Each tab 16 extends between two adjacent injectors 30 when the preheater 10 is optimally positioned. The example illustrated in Figure 2 has three tabs. This embodiment is optimised for use where there are four injectors 30, although it could also be deployed in circumstances where more than four injectors are provided.

The optimum number of tabs 16 can best be described as n-1 where n is the number of injectors. In some embodiments the extent of the tab 16 in a direction parallel to the direction of flow of the fuel along the fuel rail in use, labelled A in Figure 2, is substantially equal to the gap between the adjacent injectors. In some embodiments, the tabs may have a smaller spread in direction A than the maximum allowed for by the separation of the injectors. Embodiments in which the tabs have a reduced extent in the A direction are more universally applicable, i.e. they may be fitted onto fuel rails with a wider range of inter-injector spacings. However, these embodiments also cover a smaller percentage of the surface area of the fuel rail and therefore have a reduced heating effect.

The tabs 16 are provided with fixings 17 to attach the preheater 10 onto the fuel rail 20. In the illustrated embodiment, a fixing is provided on each tab 16. However, in some embodiments, not illustrated in the accompanying drawings, one or more of the tabs may not include a fixing.

The fixings 17 may be mechanical or magnetic. Each fixing is typically a two part fixing, with a first part being provided on a part of the tab 16 and the corresponding part being provided on the housing 12. The position of the corresponding part on the housing 12 is selected so that, when the tab 16 is wrapped around the fuel rail, the first and second parts of the fixings come together to hold the preheater 10 in place. In some embodiments the fixings are mechanical and comprise a hook on the end of the tab and a loop or eye on the housing. In some embodiments, the fixings are mechanical and comprise poppers. In some embodiments, the fixings are magnetic and comprise a pair of magnets positioned on the tab 16 and housing 12 respectively.

The heating element 14 is provided within the housing 12. It can be provided on the inner surface of the housing 12 so that, in use, it is in direct contact with the injector 30. In some embodiments, it is woven into the fabric of the housing 12 such that it is close to the inner surface of the housing, but it is at least partially enclosed within the fabric of the housing.

The heating element 14 is elongate and, in some embodiments such as that shown in Figure 2, is considerably longer than the housing 12. The heating element is therefore configured in a tortuous path, crossing and re-crossing the housing 12. As illustrated in Figure 2, the heating element 14 can be uniformly distributed over the length of the housing 12. In some embodiments, not illustrated in the accompanying drawings, the distribution may be uneven such that the heating element 14 is concentrated over the end of the fuel rail that first receives the fuel, and correspondingly less concentrated in the regions adjacent to the second and subsequent injectors 30 as the fuel flowing through to the second and subsequent injectors will have been warmed as it passed the first injector.

The heating element 14 is an electric heating element and is powered by an electrical supply 18. In the illustrated embodiment this is a 12V DC supply, commonly provided within vehicles to provide electrical supply for in car charging, infotainment centre power supply, cabin lighting etc. In some embodiments, the voltage may differ and the invention could also be made compatible with an AC power supply.

It will further be appreciated by those skilled in the art that although the invention has been described by way of example with reference to several embodiments it is not limited to the disclosed embodiments and that alternative embodiments could be constructed without departing from the scope of the invention as defined in the appended claims.

## Claims

1. A preheater for a fuel rail including a plurality of injectors, the preheater comprising a flexible housing configured to encase the fuel rail adjacent to one or more of the injectors and an electric heating element running substantially throughout the housing along a tortuous path.

2. The preheater according to claim 1, wherein the housing includes a plurality of fixings configured to affix the preheater onto the fuel rail.

3. The preheater according to claim 1 or claim 2, wherein the fixings are mechanical.

4. The preheater according to claim 1 or claim 2, wherein the fixings are magnetic.

5. The preheater according to any one of claims 1 to 4, wherein the housing is fabricated from a thermally insulating material.

6. The preheater according to any one of claims 1 to 5, wherein the flexible housing is configured to encase substantially the entire fuel rail adjacent to all of the injectors.

7. The preheater according to any one of claims 1 to 6, wherein the electric heating element comprises wires woven into the inside of the material of the housing.

8. The preheater according to any one of claims 1 to 7, wherein the electric heating element is powered by a 12V supply.
